(19) Europäisches Patentamt
European Patent Office
Office européen des brevets

(11) EP 2 868 680 B1

(12) **FASCICULE DE BREVET EUROPEEN**

(45) Date de publication et mention de la délivrance du brevet:
**29.06.2016 Bulletin 2016/26**

(21) Numéro de dépôt: **14191233.7**

(22) Date de dépôt: **31.10.2014**

(51) Int Cl.:
***B29B 9/06*** (2006.01) ***B29B 9/12*** (2006.01)
***C08G 18/48*** (2006.01) ***C08G 18/36*** (2006.01)
***C08G 18/42*** (2006.01) ***C08G 18/66*** (2006.01)
***C08G 18/76*** (2006.01) ***C08G 18/32*** (2006.01)
***C08G 18/08*** (2006.01) ***C08J 3/12*** (2006.01)
***C08L 75/08*** (2006.01) ***C08L 95/00*** (2006.01)
***C08K 3/26*** (2006.01) ***C08L 75/06*** (2006.01)

(54) **GRANULÉ DE BITUME ET DE POLYURÉTHANE ÉLASTOMÈRE THERMOPLASTIQUE, SON PROCÉDÉ DE PRÉPARATION ET SES UTILISATIONS**

GRANULAT AUS BITUMEN UND THERMOPLASTISCHEM POLYURETHANELASTOMER, SEIN HERSTELLUNGSVERFAHREN UND SEINE ANWENDUNGEN

PELLET OF BITUMEN AND THERMOPLASTIC ELASTOMER POLYURETHANE, METHOD FOR PREPARING SAME AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2013 FR 1360831**

(43) Date de publication de la demande:
**06.05.2015 Bulletin 2015/19**

(73) Titulaire: **SOPREMA**
**67100 Strasbourg (FR)**

(72) Inventeurs:
- **Sautel, Henri**
  **38540 SAINT JUST CHALEYSSIN (FR)**
- **Bindschedler, Pierre-Etienne**
  **67210 OBERNAI (FR)**
- **Perrin, Rémi**
  **67530 BOERSCH (FR)**

(74) Mandataire: **Cabinet Plasseraud**
**66, rue de la Chaussée d'Antin**
**75440 Paris Cedex 09 (FR)**

(56) Documents cités:
**EP-A1- 0 922 552** **EP-A1- 1 398 409**
**WO-A1-2011/104224**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 868 680 B1

## Description

La présente invention concerne un granulé comprenant un polyuréthane élastomère thermoplastique et du bitume, son procédé de préparation dans une extrudeuse et un procédé de préparation d'un liant bitumineux utilisant ledit granulé, qui peut notamment être utilisé pour réaliser des membranes d'étanchéité préfabriquées par dépôt dudit liant bitumineux sur un support fibreux.

On connaît depuis de nombreuses années, les membranes à base de bitume modifié par les polymères du type SBS (Styrène Butadiène Styrène) ou APP (= PPA : Polypropylène Atactique), qui sont largement développées depuis les années 1970 dans le secteur de l'étanchéité des toitures terrasse.

La modification des bitumes de distillation directe issus des raffineries est une nécessité. En effet, les bitumes classiques, utilisés notamment dans l'industrie routière, présentent des points de ramollissement à des températures de l'ordre de 40 °C et sont durs et cassants comme du verre pour des températures typiquement inférieures à -5°C.

Or, ces températures d'utilisation sont trop limitatives pour une utilisation sur des toitures où la plage de températures en fonction des climats peut varier entre -40°C et 110°C.

Il est donc nécessaire de modifier le bitume. Les techniques classiques consistent à ajouter au bitume des polymères thermoplastiques de type élastomères à blocs [SBS, SEBS (Styrène Ethylène Butadiène Styrène)] ou plastomères [Polyoléfine du type PPA, EVA (éthylène vinyl acétate), PPI(polypropylène isotactique), APAO (alpha polyoléfine amorphe)].

Ainsi, par une modification SBS, on peut obtenir un liant bitumineux ayant un point de ramollissement de l'ordre de 125°C et une souplesse à des basses températures de l'ordre de -30°C. La plage d'utilisation d'un liant modifié par des polymères plastomères est généralement comprise entre -15°C et 150°C.

Toutefois, les membranes réalisées à base de liant bitumineux modifié par les polymères précités ont leurs limites :

- les polymères SBS sont sensibles aux UV et, de ce fait, la dernière couche (couche apparente) nécessite une protection spécifique supplémentaire contre l'agression des UV.
- les polymères plastomères présentent des souplesses médiocres à basses températures et les joints de membranes réalisés avec des liants contenant ces polymères n'offrent pas une tenue à chaud satisfaisante.

La protection spécifique supplémentaire contre l'agression des UV, lorsqu'elle est intégrée à la membrane préfabriquée, est actuellement réalisée soit avec des feuillards métalliques (Aluminium, Cuivre ou inox), soit par des paillettes ou granulés d'ardoises ou de mica saupoudrées en surface lors du procédé de fabrication. Ces protections dites "auto-protections" amènent un surpoids pouvant aller jusqu'à 1,5 $kg/m^2$, représentant jusqu'à 30% du poids de la membrane et renchérissent le prix de revient de la membrane finale.

Outre les UV, ces produits connus précités vieillissent rapidement par rapport à la durée de vie des ouvrages sur lesquels ils sont appliqués et se dégradent par oxydation, n'autorisant pas une étanchéité valable sur une longue durée. Une réfection de l'étanchéité se fait en effet en moyenne tous les 15-20 ans.

Depuis quelques années se sont développés des revêtements bitumineux modifiés polyuréthane. Ces produits trouvent surtout une application dans les revêtements routiers et l'étanchéité des ouvrages d'art et des bâtiments. Les produits connus de ce type sont soit :

- applicables à froid : le produit se présente sous forme liquide, mono ou bicomposant, et atteint ses caractéristiques après la réticulation qui a lieu à l'air libre ;
- applicables à chaud : la polymérisation-réticulation se fait dans le bitume à chaud juste avant son application sur chantier.

Par exemple, la demande de brevet français n° 2 064 750 au nom de la société NAPHTACHIMIE décrit un liant bitumineux thermoplastique contenant moins de 10% en poids de polyuréthane thermodurcissable. Les polyols utilisés pour synthétiser le polyuréthane ont des fonctionnalités supérieures à 2, pouvant aller jusqu'à 8 et le rapport NCO/OH est compris entre 1 et 2, de préférence voisin de 1,1. Ce liant bitumineux présente des propriétés thermoplastiques du fait de la faible proportion de polyuréthane et peut être appliqué sur un support fibreux pour réaliser une membrane préfabriquée. Toutefois, le faible pourcentage de polyuréthane introduit ne permet pas d'obtenir des membranes suffisamment élastiques et résistantes.

Par ailleurs, par la demande de brevet européen n° 1 013 716 au nom de la Demanderesse, on connaît une composition liquide monocomposante à base de bitume et de prépolymère de polyuréthane qui polymérise directement sur le support à étanchéifier lors de son application à froid sur chantier. Ainsi, cette composition bitumineuse n'est pas thermoplastique et n'est pas destinée à la préparation de membranes préfabriquées en usine.

Par la demande de brevet WO 97/03253 au nom de la société INTERFACE, INC., on connaît un matériau en

feuille destiné à former une barrière contre l'humidité et comprenant une couche d'un mélange bitume / polyuréthane protégée par un film polymère et recouverte d'un film détachable. Le polyuréthane utilisé dans le mélange bitumineux est préparé avec un polybutadiène polyol ayant une fonctionnalité entre 2,2 et 2,6. Ainsi, le polyuréthane résultant est thermodurcissable et sensible, de par sa nature chimique, à la dégradation par les U.V. d'où la nécessité de protéger la couche bitumineuse avec un film polymère. Le matériau de cette demande de brevet n'est pas thermoplastique et il est appliqué à froid sur la surface à étanchéifier et maintenu en place par le pouvoir collant de la composition bitumineuse, éventuellement amélioré par l'ajout d'un agent collant particulier.

La Demanderesse a décrit, dans la demande de brevet français n° 2 844 283, une membrane d'étanchéité préfabriquée à base de liant bitumineux modifié par un polyuréthane thermoplastique présentant la formulation suivante, les pourcentages étant des pourcentages en poids par rapport au poids total de la composition :

- 40 à 90% de bitume,
- 10 à 50% de polyuréthane thermoplastique,
- 0 à 10% d'huile aromatique,
- 0 à 50% de charges, et
- 0 à 0,5% de catalyseur.

Le procédé de préparation du liant bitumineux consiste à synthétiser le polyuréthane thermoplastique *in situ* dans le bitume à chaud. Le liant bitumineux obtenu est alors appliqué en couche sur un support fibreux, par exemple par enduction puis calendrage, pour conduire à une membrane d'étanchéité préfabriquée pouvant notamment être utilisée pour étanchéifier les toitures. Cependant, la polymérisation *in situ* du polyuréthane dans le bitume à chaud décrite dans cette demande de brevet est compliquée d'un point de vue industriel. En effet, certains bitumes ne peuvent pas être utilisés car ils ne sont pas compatibles avec les polyuréthanes synthétisés. De plus, le bitume doit nécessairement être chauffé pour devenir liquide et la liaison polyuréthane formée lors de la polymérisation est réversible à des températures de l'ordre de 150°C ce qui dégrade la qualité du polyuréthane. De plus, la viscosité des constituants impose de passer par une étape de synthèse supplémentaire d'un quasi prépolymère. Enfin, une fois la synthèse in situ terminée, la viscosité finale du liant bitumineux est forte et nécessite des pompes spécifiques.

Après de nombreuses recherches, la Demanderesse a trouvé qu'il était possible de remédier aux inconvénients du procédé précité en préparant des granulés solides comprenant un polyuréthane élastomère thermoplastique synthétisé en présence de bitume par extrusion réactive. Les granulés de la présente invention permettent de préparer un liant bitumineux en utilisant une plus grande variété de bitumes, y compris des bitumes qui ne sont pas compatibles avec des polyuréthanes thermoplastiques, tels que notamment des bitumes ayant une teneur en asphaltène très forte (typiquement >25% en poids par rapport au poids du bitume). En effet, dans le granulé de l'invention, le polyuréthane thermoplastique du granulé est pré-compatibilisé avec du bitume lors de sa synthèse. Le granulé peut, de ce fait, être mélangé dans un bitume connu pour être incompatible avec le polyuréthane sans pour autant que cette incompatibilité pose des problèmes. Cette compatibilisation, due aux granulés, permet, en outre, d'accélérer la dispersion du polyuréthane dans le bitume du liant bitumineux ce qui réduit avantageusement le temps de préparation nécessaire pour obtenir un liant bitumineux homogène par rapport à la synthèse du polyuréthane dans le bitume à chaud tel que décrit dans la demande de brevet français n° 2 844 283. Un autre avantage lié à l'utilisation du granulé de la présente invention est que le polyuréthane dispersé au sein du liant bitumineux est de très bonne qualité. En effet, puisque l'extrusion réactive utilisée pour synthétiser le granulé est très rapide, le polyuréthane obtenu est très stable et il n'y a pas de risque que la liaison uréthane se coupe. Par ailleurs, les granulés de la présente invention étant solides, ils sont faciles à stocker et à transporter et peuvent donc être utilisés bien après leur préparation sur des sites où les bitumes disponibles sont de qualité moyenne. Cela permet également de diminuer les quantités de bitume chaud liquide à transporter. Un des autres avantages de la présente invention consiste en l'utilisation de malaxeurs classiques pour réaliser le liant à la place de l'utilisation de réacteur / malaxeur.

La présente invention a ainsi pour objet un granulé comprenant un polyuréthane élastomère thermoplastique et du bitume dans lequel ledit polyuréthane élastomère thermoplastique est obtenu par réaction entre :

- un polyol ayant une fonctionnalité comprise entre 1,75 et 2,2, de préférence entre 1,85 et 2,1, plus préférentiellement entre 1,95 et 2,05 et une masse molaire comprise entre 500 et 6000 g/mol, de préférence entre 900 et 5000 g/mol, plus préférentiellement entre 1500 et 3500 g/mol;
- un diisocyanate ; et
- un diol allongeur de chaine ayant une masse molaire inférieure à 500 g/mol, de préférence inférieure à 400 g/mol, plus préférentiellement inférieure à 300 g/mol ; avec un ratio NCO/OH compris entre 0,9 et 1,02, de préférence entre 0,95 et 1, plus préférentiellement entre 0,97 et 0,99.

Un autre objet de l'invention est un procédé de préparation d'un granulé comprenant un polyuréthane élastomère

thermoplastique et du bitume, ledit polyuréthane étant obtenu par réaction de polymérisation entre :

- un polyol ayant une fonctionnalité comprise entre 1,75 et 2,2, de préférence entre 1,85 et 2,1, plus préférentiellement entre 1,95 et 2,05 et une masse molaire comprise entre 500 et 6000 g/mol, de préférence entre 900 et 5000 g/mol, plus préférentiellement entre 1500 et 3500 g/mol
- un diisocyanate ; et
- un diol allongeur de chaine ayant une masse molaire inférieure à 500 g/mol, de préférence inférieure à 400 g/mol, plus préférentiellement inférieure à 300 g/mol ; avec un ratio NCO/OH compris entre 0,9 et 1,02, de préférence entre 0,95 et 1, plus préférentiellement entre 0,97 et 0,99;

ladite réaction de polymérisation étant conduite dans une extrudeuse en présence de bitume.

L'invention a également pour objet l'utilisation du granulé selon l'invention pour la préparation d'un liant bitumineux. Elle a également pour objet un procédé de préparation d'un liant bitumineux comprenant l'incorporation des granulés selon l'invention dans une composition comprenant du bitume liquide et éventuellement un composé choisi parmi une huile, une charge, un additif et un catalyseur.

Granulé de bitume et de polyuréthane thermoplastique

Le granulé de la présente invention comprend un polyuréthane élastomère thermoplastique et du bitume. Le granulé peut en outre comprendre un catalyseur, des additifs et des charges.

Les granulés selon l'invention sont constitués d'un mélange homogène de bitume et de macromolécules de polyuréthane élastomère thermoplastique.

Par mélange homogène, on entend, au sens de la présente invention une absence de zones fortement concentrées en bitume ou en polyuréthane.

Selon un mode de réalisation particulier, le granulé de la présente invention comprend :

- de 5 à 70%, de 10 à 70%, de 15 à 50%, de 20 à 40% en poids de bitume par rapport au poids du granulé ;
- de 95 à 30%, de 90 à 30%, de 85 à 50%, de 80 à 60% en poids de polyuréthane élastomère thermoplastique par rapport au poids du granulé.

Selon un mode de réalisation préféré, le granulé de la présente invention comprend :

- de 10 à 15% en poids de bitume par rapport au poids du granulé ;
- de 90 à 85% en poids de polyuréthane élastomère thermoplastique par rapport au poids du granulé.

Le bitume compris dans le granulé de la présente invention est avantageusement un bitume de distillation directe également appelé bitume pur. Des exemples de bitumes pouvant être utilisés sont les bitumes des grades 70/100 et 160/220, les grades étant définis selon la pénétrabilité d'une aiguille dans 100 g de bitume à 25°C après 5 secondes, exprimée en $1/10^{ème}$ de mm et mesurée selon la norme EN 1426 de Juin 2007.

Le granulé de la présente invention comprend également un polyuréthane élastomère thermoplastique.

Par thermoplastique on entend, au sens de la présente invention, un matériau qui ramollit sous l'action de la chaleur et qui durcit en refroidissant de manière réversible sans perte de propriétés.

Par élastomère on entend, au sens de la présente invention, un matériau qui est capable de subir une forte déformation élastique, c'est-à-dire qui est capable de revenir à sa forme initiale lorsque l'on supprime les déformations.

Le polyuréthane élastomère thermoplastique compris dans le granulé de la présente invention peut notamment être obtenu par polymérisation de trois composés : (i) un polyol ayant une fonctionnalité comprise entre 1,75 et 2,2, de préférence entre 1,85 et 2,1, plus préférentiellement entre 1,95 et 2,05 et une masse molaire comprise entre 500 et 6000 g/mol, de préférence entre 900 et 5000 g/mol, plus préférentiellement entre 1500 et 3500 g/mol, (ii) un diisocyanate et (iii) un diol allongeur de chaine, dans des proportions spécifiques.

Ainsi, le ratio NCO/OH des trois composés entrant dans la synthèse du polyuréthane élastomère thermoplastique est compris entre 0,9 et 1,02, de préférence entre 0,95 et 1, plus préférentiellement entre 0,97 et 0,99. En effet, si le ratio NCO/OH est supérieur à 1,02, on obtient un polyuréthane ayant des branchements ce qui nuit à la thermoplasticité et à la miscibilité avec le bitume. Si le ratio NCO/OH est inférieur à 0,9, on obtient un polyuréthane ayant une masse molaire trop faible ce qui entraine une diminution du point de fusion.

Par fonctionnalité, on entend, au sens de la présente invention, le nombre total de fonctions hydroxyles réactives par mole de polyol.

Le polyol selon l'invention a un indice hydroxyle ($I_{OH}$) qui est directement lié à la fonctionnalité et à la masse molaire dudit polyol et peut être calculé avec la formule suivante.

$$I_{OH} = \text{(fonctionnalité du polyol x 56109.37) / Masse molaire du polyol}$$

L'indice hydroxyle correspond au nombre de mg de KOH nécessaire pour neutraliser un acide ou un anhydride qui se combine à un gramme de polyol.

Ainsi, selon un mode de réalisation, le polyol a un indice hydroxyle compris entre 18 mg KOH/g et 224 mg KOH/g, préférentiellement entre 32 mg KOH/g et 75 mg KOH/g.

L'indice d'hydroxyle peut être déterminé par dosage inverse utilisant de la potasse.

Selon l'invention, la masse molaire du polyol peut être déterminée par différentes méthodes telles que la chromatographie en phase liquide (THF) ou la chromatographie d'exclusion stérique.

Ainsi, une fois l'indice hydroxyle et la masse molaire du polyol déterminés, il est possible de déterminer la valeur de la fonctionnalité du polyol.

Ou inversement, une fois la fonctionnalité et la masse molaire du polyol déterminées, il est possible de déterminer la valeur de l'indice hydroxyle.

Par ratio NCO/OH on entend, au sens de la présente invention, le rapport stoechiométrique entre le nombre de fonctions NCO du diisocyanate et le nombre de fonctions OH du polyol et du diol allongeur de chaîne. Le ratio NCO/OH est calculé avec la formule suivante :

$$\text{Ratio NCO/OH} = (m_{exp\ diiso} \times ME_{diiso}) / (m_{exp\ polyol} \times ME_{polyol})$$

où:

- $m_{exp\ diiso}$ est la masse du diisocyanate ;
- $m_{exp\ polyol}$ est la masse du polyol ;
- $ME_{polyol}$ est la masse équivalente du polyol et correspond au ratio entre la masse molaire du polyol et la fonctionnalité du polyol ;
- $ME_{diiso}$ est la masse équivalente du diisocyanate et correspond au ratio entre la masse molaire du diisocyanate et la fonctionnalité du diisocyanate.

Par fonctionnalité du diisocyanate, on entend, au sens de la présente invention, le nombre total de fonctions isocyanates réactives par mole d'isocyanate.

Le polyol entrant dans la synthèse du polyuréthane élastomère thermoplastique de la présente invention présente une fonctionnalité comprise entre 1,75 et 2,2, de préférence entre 1,85 et 2,1, plus préférentiellement entre 1,95 et 2,05 et une masse molaire comprise entre 500 et 6000 g/mol, de préférence entre 900 et 5000 g/mol, plus préférentiellement entre 1500 et 3500 g/mol.

Selon un mode de réalisation préféré, le polyol présente une fonctionnalité moyenne de 2.

Ledit polyol peut notamment être choisi parmi un polyéther polyol, un polyester polyol, un polycarbonate polyol, une polyoléfine polyol, un polyol à base d'huile végétale et leurs mélanges. De préférence, le polyol est choisi parmi un polyéther polyol, un polyester polyol, une polyoléfine polyol, et leurs mélanges.

Les polyéthers polyols sont obtenus par polymérisation par ouverture d'un éther cyclique tel que l'oxyde d'éthylène, l'oxyde de propylène ou le tétrahydrofurane. Des exemples de polyéthers polyols pouvant être utilisés dans la présente invention sont le poly(éthylène glycol) de formule

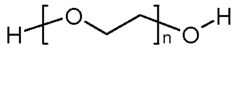

,

le poly(propylène glycol) de formule

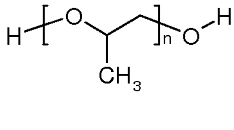

et le poly(tétraméthylène glycol) de formule

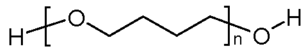.

Les polyesters polyols sont obtenus par réaction entre un acide dicarboxylique et un diol ou par réaction entre un ester cyclique et un diol. Des exemples d'acides dicarboxyliques utilisables sont l'acide succinique, l'acide glutamique, l'acide octanedioïque, l'acide sébacique, l'acide maléique, l'acide fumarique, l'acide phtalique, l'acide isophtalique et l'acide téréphtalique. L'acide dicarboxylique est avantageusement un acide gras dicarboxylique, c'est-à-dire un acide dicarboxylique aliphatique saturé ou insaturé comprenant de 8 à 44 atomes de carbone entre les fonctions acides pouvant, par exemple, être synthétisé par dimérisation d'acides monocarboxyliques aliphatiques insaturés ou d'esters aliphatiques insaturés ayant entre 8 et 22 atomes de carbone tels que l'acide linoléique et l'acide linolénique. Un exemple d'ester cyclique utilisable est le caprolactone. Des exemples de diols utilisables sont l'éthanediol, le diéthylène glycol, le 1,2-propanediol, le 1,3-propanediol, le dipropylène glycol, le 1,4-butanediol, le 1,5-pentanediol, le 1,6-hexanediol, le 1,10-décanediol, la glycérine, le triméthylolpropane, le tripropylène glycol, le tétraéthylène glycol, le tétrapropylène glycol, le tétraméthylène glycol et le 1,4-cyclohexane-diméthanol. Des exemples de polyesters polyols pouvant être utilisés dans la présente invention sont le poly(éthylène adipate) de formule

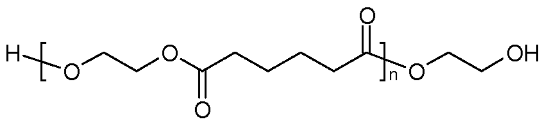;

le poly(caprolactone diol) de formule

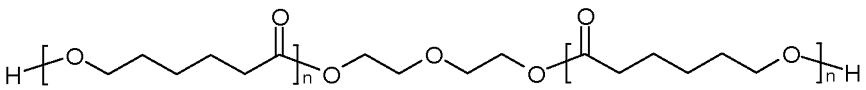;

ou le polyol polyester à base de dimères d'acide gras

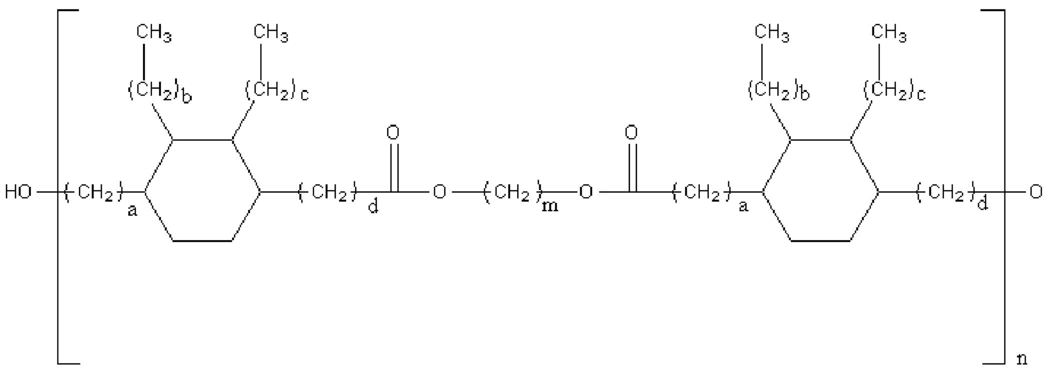.

Dans les formules des différents polyols données dans la présente demande, les valeurs de n, m, a, d seront choisies par l'homme du métier de façon à satisfaire notamment la masse molaire requise.

Les polycarbonates polyols sont obtenus par réaction entre un diol et du phosgène, un chloroformate, un carbonate de dialkyle ou un carbonate de diallyle. Des diols pouvant être utilisés sont l'éthanediol, le diéthylène glycol, le 1,3-butanediol, le 1,4-butanediol, 1,6-hexanediol, le 2-méthyl-1,3-propanediol, 2,2-diméthyl-1,3-propanediol et le 1,5-pentanediol. Un exemple de polycarbonate polyol pouvant être utilisé dans la présente invention est le polycarbonate du 2-méthyl-1,3-propanediol de formule

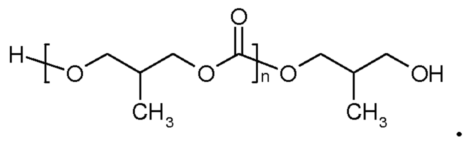

Les polyoléfines polyols sont obtenues par polymérisation d'une oléfine en présence d'un initiateur comprenant une fonction alcool protégée. Des exemples de polyoléfines polyols pouvant être utilisées dans la présente invention sont les polyisobutylènes diols, les polyisoprènes diols et les polybutadiènes diols tels que ceux commercialisés sous la dénomination commerciale KRASOL® ou Poly bd® par la société Cray Valley. Les polyoléfines polyols hydrogénées, telles que les polyisobutylènes diols hydrogénés, les polyisoprènes diols hydrogénés et les polybutadiènes diols hydrogénés sont également comprises dans les polyoléfines polyol pouvant être utilisées dans la présente invention.

Selon un mode de réalisation préféré, le polyol entrant dans la synthèse du polyuréthane élastomère thermoplastique de la présente invention est relativement apolaire. Par relativement apolaire, on entend, au sens de la présente invention, que le polyol comprend au moins une chaîne hydrocarbonée saturée ou insaturée éventuellement interrompue par une ou plusieurs fonctions éther (-O-), ester (-CO-O-), carbonate (-O-CO-O-) et leur mélanges, ladite chaîne ayant au moins 20, de préférence au moins 30, plus préférentiellement au moins 40 atomes de carbone entre 2 fonctions hydroxyles. Selon un mode de réalisation particulièrement préféré, ladite chaîne hydrocarbonée n'est pas substituée par des groupes halogénés, azotés, hydroxylés.

Le diisocyanate entrant dans la synthèse du polyuréthane élastomère thermoplastique de la présente invention a 2 fonctions NCO. Ledit diisocyanate peut notamment être choisi parmi les diisocyanates aromatiques, aliphatiques, cycloaliphatiques et leurs mélanges. De préférence, le diisocyanate est un diisocyanate aromatique.

Des exemples de diisocyanates aromatiques pouvant être utilisés dans la présente invention sont les isomères du toluène diisocyanate (TDI) tels que le 2,4-toluène diisocyanate, le 2,6-toluène diisocyanate, et les mélanges isomériques de ceux-ci, les isomères du diphénylméthane diisocyanate (MDI) tels que le 2,2'-diphénylméthane diisocyanate, le 2,4'-diphénylméthane diisocyanate, le 4,4'-diphénylméthane diisocyanate et les mélanges isomériques de ceux-ci, le 1,4-phénylène diisocyanate (PPDI), le 1,5-naphtalène diisocyanate (NDI) et le métaxylylène diisocyanate (MXDI).

Des exemples de diisocyanates aliphatiques pouvant être utilisés dans la présente invention sont le tétraméthylène diisocyanate, le pentaméthylène diisocyanate et l'hexaméthylène diisocyanate (HDI).

Des exemples de diisocyanates cycloaliphatiques pouvant être utilisés dans la présente invention sont le 1,4-cyclohexane diisocyanate, l'isophorone diisocyanate (IPDI) et le 4,4'-méthylènebis(cyclohexyl isocyanate) (HMDI).

Le diol allongeur de chaine entrant dans la synthèse du polyuréthane élastomère thermoplastique de la présente invention a une masse molaire inférieure à 500 g/mol, de préférence inférieure à 400 g/mol, plus préférentiellement inférieure à 300 g/mol.

Des exemples de diols allongeurs de chaine pouvant être utilisés dans la présente invention sont des alkanediols tels que l'éthanediol, le 1,3-propanediol, le 1,3-butanediol, le 1,4-butanediol, le 1,5-pentanediol, le 1,6-hexanediol, le 1,7-heptanediol, le 1,8-octanediol, le 1,9-nonanediol, le 1,10-décanediol, le 1,11-undécanediol, le 1,12-dodécanediol, le néopentylglycol, le 2-butyl-2-éthyl-1,3-propanediol, le 2,4-diéthyl-1,5-pentanediol, le 3-méthyl-1,5-pentanediol et le 2-éthyl-1,3-hexanediol ; des alkyléthers de glycols tels que le diéthylène glycol, le triéthylène glycol, le propylène glycol, le dipropylène glycol et le tripropylène glycol ; des diols cycloaliphatique tels que le 1,2-cyclopentadiol, le 1,4-cyclohexanediméthanol et le 1,4-dihydroxycyclohexane ; des alkylaryl diols tels que l'hydroquinone bis(2-hydroxyéthyl)éther (HQEE), le 1,4-benzènediméthanol, le biséthoxy biphénol, les éthoxylates de bisphénol A et les éthoxylates de bisphénol F ; les diols hétérocycliques tels que l'isosorbide ; et leurs mélanges.

La réaction de polymérisation peut éventuellement être réalisée en présence d'un catalyseur. Ainsi, le granulé de la présente invention peut également comprendre un catalyseur. Le catalyseur est notamment choisi parmi les catalyseurs organométalliques à base d'étain, de zinc ou de bismuth. Des exemples de catalyseur à base d'étain utilisables sont notamment les composés de formule $R_nSnX_m$ dans laquelle R est un groupe alkyl ayant entre 1 et 10 atomes de carbone ; X est un groupe carboxylate issu d'un acide carboxylique ayant 1 à 20 atomes de carbone ; n est égal à 1, 2 ou 3 ; m est égal à 1, 2 ou 3 ; et n+m=4 ; tels que le dilaurate de dibutylétain ou le tris(2-éthylhexanoate) de butylétain. Des exemples de catalyseur à base de zinc utilisables sont notamment le bis(2-éthylhexanoate) de zinc et les sels de zinc d'acides gras linéaires ou ramifiés ayant 2 à 20 atomes de carbone. Un exemple de catalyseur à base de bismuth utilisable est notamment le trisneodécanoate de bismuth. La quantité de catalyseur utilisée est comprise entre 0.001 et 1%, de préférence entre 0,005 et 0.5% en poids par rapport au poids total des constituants du granulé.

La réaction de polymérisation peut éventuellement être réalisée en présence d'un additif. Ainsi, le granulé de la présente invention peut également comprendre un additif. Des exemples d'additifs utilisables sont les agents antioxydants, les agents anti UV, les agents débullants et les stabilisants tels que les composés phénoliques type Irganox® 1010, les composés à base de phosphite type Irganox® 168 ou les stabilisants à l'hydrolyse tel que le Stabaxol®.

Selon un mode de réalisation particulier, le polyuréthane élastomère thermoplastique de la présente invention

présente une masse molaire ($M_n$) comprise entre 10 000 et 100 000 g/mol, de préférence entre 20 000 et 80 000 g/mol, plus préférentiellement entre 40 000 et 60 000 g/mol.

Le polyuréthane élastomère thermoplastique de la présente invention est constitué de segments rigides et de segments souples. Les segments rigides proviennent des liaisons uréthanes et du diol allongeur de chaîne tandis que les segments souples proviennent de la longue chaine du polyol.

Le taux de segments rigides (% en poids de diisocyanate + % en poids de diol allongeur de chaîne par rapport au poids du polyuréthane) est compris entre 5 et 40%, de préférence entre 10 et 30%, plus préférentiellement entre 15 et 25% et le taux de segments souples (% en poids de polyol par rapport au poids du polyuréthane) est compris entre 60 à 95%, de préférence entre 70 et 90%, plus préférentiellement entre 75 et 85%.

Le polyuréthane élastomère thermoplastique de la présente invention présente une température de transition vitreuse (Tg) comprise entre -60°C et 0°C, de préférence entre -55°C et -10°C, plus préférentiellement entre -50°C et -20°C.

Selon un mode de réalisation particulièrement préféré, le polyuréthane élastomère thermoplastique de la présente invention comprend deux températures de transition vitreuse. Ainsi, le polyuréthane peut présenter une première Tg (liée aux segments souples) entre -60°C et 0°C, de préférence entre -55°C et -10°C, plus préférentiellement entre -50°C et -20°C et une deuxième Tg (liée aux segments rigides) entre 75°C et 125°C, de préférence entre 85°C et 115°C, plus préférentiellement entre 95°C et 105°C.

Le granulé objet de la présente invention présente des propriétés très intéressantes par rapport à un granulé de polyuréthane élastomère thermoplastique pur. En effet, le granulé selon l'invention présente une température de fusion inférieure à un granulé comprenant uniquement le polyuréthane. Ainsi, l'utilisation de granulés selon l'invention permet avantageusement de diminuer la température du bitume dans lequel sont introduits les granulés et de raccourcir le temps de mélange nécessaire à la préparation d'un liant bitumineux par rapport à l'utilisation de granulés de polyuréthane pur. Ainsi, il n'y a pas d'oxydation ni de dégradation thermique du polyuréthane lors de la préparation du liant bitumineux.

Le granulé objet de la présente invention peut notamment présenter une température de fusion comprise entre 100 et 200°C, de préférence entre 120 et 190°C, plus préférentiellement entre 130 et 170°C.

De plus, le granulé selon l'invention présente un indice de fluidité (MFI dans les conditions 190°C/3,8 kg) supérieur à un granulé comprenant uniquement le polyuréthane. L'indice de fluidité d'un matériau reflète la capacité du matériau à s'écouler à chaud. Ainsi, les granulés de la présente invention s'écoule bien mieux à chaud que des granulés de polyuréthane pur ce qui permet avantageusement de raccourcir le temps de mélange nécessaire à la préparation d'un liant bitumineux par rapport à l'utilisation de granulés de polyuréthane pur.

Le granulé objet de la présente invention peut notamment présenter un indice de fluidité (190°C/3,8 kg) compris entre 50 et 500, de préférence compris entre 80 et 300, plus préférentiellement compris entre 100 et 200.

Selon un mode de réalisation préférentiel, le polyuréthane élastomère thermoplastique du granulé objet de la présente invention est synthétisé dans une extrudeuse en présence de bitume. Ce procédé de préparation du granulé est détaillé ci-après.

Procédé de préparation du granulé

Le procédé de préparation du granulé comprenant un polyuréthane élastomère thermoplastique dispersé dans du bitume est réalisé en effectuant la réaction de polymérisation dudit polyuréthane dans une extrudeuse en présence de bitume. Ce procédé de préparation est également appelé synthèse par extrusion réactive.

Toutes les caractéristiques décrites pour le granulé objet de la présente invention s'appliquent au granulé obtenu par le procédé selon la présente invention.

Les extrudeuses sont traditionnellement utilisées pour la transformation des polymères. Elles sont composées principalement d'une ou plusieurs vis sans fin qui tournent à l'intérieur d'un fourreau permettant ainsi un brassage des polymères introduits. Ainsi, le procédé d'extrusion est utilisé généralement à des fins de mélange et de mise en forme de matériaux. Ce procédé est également utilisé pour des réactions de polymérisation où l'extrudeuse sert alors de réacteur de polymérisation, on parle dans ce cas d'extrusion réactive. Cela permet avantageusement de passer d'un procédé discontinu à un procédé continu et d'augmenter ainsi les cadences industrielles et l'homogénéité de la production. De plus, étant donné que les réactifs sont mis en contact très facilement au sein de l'extrudeuse, le procédé d'extrusion réactive est très sobre en énergie et en quantités de matières. De surcroît, l'extrusion réactive permet un contrôle de la cinétique de réaction et une amélioration des rendements obtenus. Enfin, étant donné que la réaction est confinée au sein de l'extrudeuse, ce procédé permet de mieux protéger les hommes et l'environnement par rapport notamment à des mélangeurs ou réacteurs discontinus, qui présentent l'inconvénient de mettre en oeuvre en simultané des quantités importantes de matière sensible.

Au sens de la présente invention, le terme extrudeuse regroupe les appareillages suivants : les extrudeuses mono-vis, les extrudeuses multi-vis telles que notamment les extrudeuses bivis co- ou contrarotatives, les extrudeuses

planétaires, les extrudeuses annulaires et les mélangeurs statiques ou intensifs.

Selon un mode de réalisation préféré, l'extrudeuse utilisée dans le procédé de l'invention est une extrudeuse bivis corotative.

Le procédé objet de la présente invention permet de préparer un granulé qui comprend :

- de 5 à 70%, de 10 à 70%, de 15 à 50%, de 20 à 40% en poids de bitume par rapport au poids du granulé ;
- de 95 à 30%, de 90 à 30%, de 85 à 50%, de 80 à 60% en poids de polyuréthane élastomère thermoplastique par rapport au poids du granulé.

Selon un mode de réalisation préféré, le procédé objet de la présente invention comprend les étapes suivantes :

- introduction du polyol, du diisocyanate, du diol allongeur de chaîne et éventuellement d'un catalyseur, d'un additif ou d'une charge dans une extrudeuse ;
- introduction du bitume dans l'extrudeuse ;
- découpe de l'extrudat en granulés en sortie de l'extrudeuse.

Selon un autre mode de réalisation, le procédé objet de la présente invention comprend les étapes suivantes :

- préparation d'un prépolymère par réaction entre le polyol et le diisocyanate ;
- introduction du prépolymère, du diol allongeur de chaîne et éventuellement d'un catalyseur, d'un additif ou d'une charge dans une extrudeuse ;
- introduction du bitume dans l'extrudeuse ;
- découpe de l'extrudat en granulés en sortie de l'extrudeuse.

L'étape de préparation du prépolymère par réaction entre le polyol et le diisocyanate est réalisée en dehors de l'extrudeuse. Cette étape peut être réalisée dans les conditions habituelles, par exemple agitation sous atmosphère inerte dans un réacteur pendant 45 à 120 minutes à une température de 80 à 90°C.

Selon un mode de réalisation particulier, le polyol peut être chauffé avant son introduction dans l'extrudeuse. Par exemple, le polyol peut être chauffé à une température comprise entre 80 et 150°C.

Selon un mode de réalisation préféré, le diisocyanate est introduit dans l'extrudeuse sous forme liquide. Ainsi, il est préférable de faire fondre le diisocyanate avant son introduction dans l'extrudeuse.

L'étape d'introduction du polyol, du diisocyanate, du diol allongeur de chaîne et éventuellement du catalyseur et/ou de l'additif et/ou de la charge dans l'extrudeuse et l'étape d'introduction du prépolymère, du diol allongeur de chaîne et éventuellement du catalyseur et/ou de l'additif et/ou de la charge dans l'extrudeuse peuvent être réalisées de plusieurs manières. Chaque réactif peut être introduit dans l'extrudeuse séparément, ou bien tous les réactifs peuvent être préalablement mélangés ensemble puis introduits dans l'extrudeuse ou bien certains réactifs sont introduits séparément et d'autres sont préalablement mélangés ensemble avant d'être introduits dans l'extrudeuse. De préférence, on introduit le polyol et le diisocyanate séparément et on introduit le diol allongeur de chaîne en mélange avec le catalyseur et/ou l'additif et/ou la charge.

On peut avantageusement contrôler le débit de chaque réactif ou mélange de réactif introduit dans l'extrudeuse avec des pompes volumétriques.

Selon un mode de réalisation préféré, la température de la zone de l'extrudeuse dans laquelle sont introduits le polyol et le diisocyanate ou le prépolymère, le diol allongeur de chaîne et éventuellement le catalyseur est comprise entre 200 et 260°C, de préférence entre 210 et 250°C, plus préférentiellement entre 220 et 230°C.

Le bitume peut être introduit dans l'extrudeuse en même temps ou bien en aval de la zone de l'extrudeuse dans laquelle sont introduits le polyol et le diisocyanate ou le prépolymère, le diol allongeur de chaîne et éventuellement le catalyseur et/ou l'additif et/ou la charge. De préférence, le bitume est introduit dans l'extrudeuse en aval de la zone de l'extrudeuse dans laquelle sont introduits le polyol et le diisocyanate ou le prépolymère, le diol allongeur de chaîne et éventuellement le catalyseur et/ou l'additif et/ou la charge. Par exemple, le bitume peut être introduit au milieu de l'extrudeuse.

Selon un mode de réalisation préféré, la température de la zone de l'extrudeuse dans laquelle est introduit le bitume est comprise entre 170 et 220°C, de préférence entre 180 et 210°C, plus préférentiellement entre 190 et 200°C.

L'étape de découpe de l'extrudat en granulés en sortie de l'extrudeuse peut notamment être réalisée avec un ou plusieurs couteaux en sortie de l'extrudeuse sous un flux d'eau froide.

Selon un mode de réalisation préféré, la sortie de l'extrudeuse est une filière qui comprend un ou plusieurs trous de section circulaire, de préférence la filière comprend deux trous de section circulaire.

Selon un autre mode de réalisation préféré, l'étape de découpe est réalisée avec 4 couteaux tournants.

Selon encore un autre mode de réalisation préféré, la température du flux d'eau est comprise entre 5°C et

15°C, de préférence entre 8 et 12°C.

Selon un autre mode de réalisation préféré, le flux d'eau froide peut comprendre un agent anti-collant et/ou les granulés sont recouverts d'un agent anti-collant après l'étape de découpe. Des agents anti-collants utilisables dans la présente invention sont le talc, du stéarate de calcium/zinc, de la silice pyrogénée.

Le procédé selon l'invention peut éventuellement comprendre une étape de séchage des granulés après l'étape de découpe de l'extrudat en granulés. Selon un mode de réalisation particulier, les granulés sont séchés à une température comprise entre 50 et 90°C, de préférence entre 60 et 80°C pendant une durée comprise entre 1 h et 3 h, de préférence entre 1h30 et 2h30. Selon un mode de réalisation préféré, il n'y a pas de réagglomération du bitume lors de l'étape de séchage des granulés.

Utilisation du granulé

Le granulé objet de la présente invention peut notamment être utilisé pour préparer un liant bitumineux en ajoutant ledit granulé dans du bitume à chaud. Ledit liant bitumineux obtenu comprend du bitume, un polyuréthane élastomère thermoplastique et éventuellement une huile et/ou une charge et/ou un additif et/ou un catalyseur.

Par exemple, le granulé de la présente invention peut être utilisé pour préparer un liant bitumineux ayant la composition suivante, les pourcentages étant des pourcentages en poids par rapport au poids total de la composition :

- 40 à 90%, de préférence 60 à 80% de bitume ;
- 10 à 50%, de préférence 15 à 40% de polyuréthane élastomère thermoplastique ;
- 0 à 10%, de préférence 0 à 5%, plus préférentiellement 0 à 3% d'huile ;
- 0 à 50%, de préférence 0 à 40%, plus préférentiellement 0 à 20% de charge ;
- 0 à 20% d'additif ; et
- 0 à 0,5% de catalyseur.

Ainsi, l'invention porte également sur un procédé de préparation d'un liant bitumineux comprenant l'incorporation des granulés décrits précédemment dans une composition comprenant du bitume liquide et éventuellement un ou plusieurs composé(s) choisi(s) dans le groupe consistant en une huile, une charge, un additif et un catalyseur.

Selon un mode de réalisation avantageux, le bitume dans lequel sont introduits les granulés peut être un bitume incompatible avec les polyuréthanes tels que notamment les bitumes ayant une teneur en asphaltène très forte (> 25% en poids par rapport au poids du bitume), comme certains bitumes de grades 70/100 ou 35/50.

L'huile et/ou la charge et/ou l'additif éventuels peuvent être ajoutés avant, pendant ou après l'ajout du granulé dans le bitume à chaud. De préférence, l'huile et/ou la charge et/ou l'additif éventuels sont ajoutés après l'ajout du granulé. Des huiles pouvant être ajoutées dans le liant sont des huiles naphténiques telles que Ruetasolv® DI ou la NYTEX 820. Des charges pouvant être ajoutées dans le liant sont des charges minérales ou organiques telles que le carbonate de calcium, la silice, le talc, la dolomie, le kaolin, le noir de carbone, et leurs mélanges. Des additifs pouvant être ajoutés dans le liant sont des agents ignifugeants tels que la colémanite, des agents anti-racines tels que le Preventol® B5.

L'utilisation du granulé de la présente invention pour préparer un liant bitumineux permet avantageusement de réduire la température du bitume dans lequel les granulés sont ajoutés par rapport à l'utilisation de granulés de polyuréthane pur. Ainsi, les granulés peuvent être ajoutés dans un bitume chauffé à une température inférieure à 170°C, de préférence inférieure à 160°C, plus préférentiellement inférieure à 150°C.

L'utilisation du granulé de la présente invention pour préparer un liant bitumineux permet avantageusement de réduire le temps de mélange nécessaire pour obtenir un liant bitumineux homogène sans infondus par rapport à l'utilisation de granulés de polyuréthane pur. Ainsi, le temps nécessaire pour obtenir un mélange homogène est inférieur à 45 min, de préférence inférieur à 35 min, plus préférentiellement inférieur à 25 min. De plus, l'utilisation du granulé de la présente invention pour préparer un liant bitumineux n'entraine pas de modifications significatives ni de la température de Bille anneau (Tba) ni de la pliabilité à froid du liant formulé. Ainsi, la Tba d'un liant bitumineux formé avec des granulés de la présente invention est égale à la Tba $\pm$ 10°C, de préférence Tba $\pm$ 5°C d'un liant formulé avec des granulés de polyuréthane pur de même composition. La température de Bille anneau correspond à la température de ramollissement du liant bitumineux et est mesurée selon la méthode décrite ci-après.

Selon un mode de réalisation particulier, le liant bitumineux obtenu en utilisant le granulé de la présente invention est déposé sur un support fibreux pour former une membrane d'étanchéité préfabriquée. Le liant bitumineux peut notamment être déposé sur le support fibreux par enduction, par exemple avec une racle, puis le support fibreux peut être imprégné à coeur avec le liant bitumineux, par exemple en passant le support fibreux enduit dans un rouleau calandreur.

La membrane d'étanchéité obtenue se présente notamment sous la forme d'un rouleau qui peut être déroulé sur la surface à étanchéifier, les différentes bandes de membranes sont alors soudées entre elles au chalumeau ou

bien à l'air chaud.

Selon un autre mode de réalisation, le liant bitumineux obtenu en utilisant le granulé de la présente invention est utilisé en tant que liant d'enrobé routier.

L'invention va être décrite plus en détails à l'aide des exemples suivants qui sont donnés à titre purement illustratif.

## EXEMPLES

Dans la description et les exemples ci-dessous, les méthodes suivantes ont été utilisées pour mesurer la température de transition vitreuse, la température de fusion, l'indice de fluidité MFI (190°C/3,8 kg) et la température de bille anneau.

***Température de transition vitreuse :*** La mesure de température de transition vitreuse est réalisée avec un calorimètre différentiel à balayage (DSC) en effectuant les cycles suivants à 10°C/min :

Cycle 1 : montée en température de la température ambiante jusqu'à 250°C ;
Cycle 2 : descente en température jusqu'à -80°C ;
Cycle 3 : remontée en température jusqu'à 250°C.
Seul le 3$^{ème}$ cycle est utilisé pour mesurer la Tg.

***Température de fusion*** **:** La mesure de la température de fusion est réalisée avec un banc Kofler et correspond à la température pour laquelle le produit est complètement liquide.

***Indice de fluidité* (190°C/3,8 kg) :** L'indice de fluidité est mesuré selon la norme ASTM D1238 avec un melt flow indexer qui consiste à faire fondre 3,8 kg de matière à 190°C et à mesurer l'écoulement de cette matière à travers une filière calibrée sous un poids calibré.

***Température de Bille anneau (TBA) :*** La TBA est mesurée selon la norme NF EN 1427, Juin 2007. Le matériau à tester est placé dans des anneaux en cuivre. Les anneaux sont placés dans un TBAmètre. Une bille métallique est placée en surface des anneaux qui sont chauffées jusqu'à ce les billes passent au travers de l'anneau. La température à laquelle les billes passent au travers est la TBA.

**Exemple 1 : Procédé de préparation de granulés selon l'invention**

L'extrudeuse utilisée pour préparer les granulés est une bivis corotative ayant un diamètre de 32 mm et un rapport Longueur/Diamètre = 80. Le profil de vis se trouve à la figure 1.

Dans tous les exemples, les constituants suivants sont utilisés :

**Polyols :**

- polyester polyol de type dimère d'acides gras en $C_{18}$ ayant une masse molaire de 3 000 g/mol vendu sous la référence commerciale Radia® 7285 par la société OLEON
- polyester polyol de type dimère d'acides gras en $C_{18}$ ayant une masse molaire de 3 000 g/mol vendu sous la référence commerciale Priplast® 3196 par la société CRODA
- polyéther polyol de type polytétrahydrofurane ayant une masse molaire de 2 000 g/mol (appelé pour la suite PTHF 2000)

**Diol allongeur de chaine :**

-1,4-butanediol (appelé pour la suite BDO)

**Diisocyanate :**

-4,4'-diphénylméthane diisocyanate vendu sous la référence commerciale Suprasec® 1306 par la société HUNTSMAN (appelé pour la suite MDI)

**Catalyseur** :

- dilaurate de dibutylétain vendu sous la référence commerciale DABCO® T-12N par la société AIR PRODUCTS

**Bitume** :

- bitume 1 : bitume de grade 160/220 vendu sous la référence commerciale B200K par la raffinerie de Karlsruhe
- bitume 2 : bitume de grade 70/100 vendu par la raffinerie de Godorf.

Les conditions opératoires sont les suivantes :

- Le polyol est stocké à 100°C. Le polyol est introduit dans l'extrudeuse en zone Z1 avec une pompe de volume 6 $cm^3$/tour.
- L'allongeur de chaîne et le catalyseur sont préalablement mélangés en ajoutant 50 ppm de catalyseur dans le diol. Le mélange est introduit dans l'extrudeuse en zone Z1 à l'aide d'une pompe de volume 0,6 $cm^3$/tour.
- Le diisocyanate est préalablement fondu à 60°C. Le diisocyanate est introduit dans l'extrudeuse en zone Z1 à l'aide d'une pompe de volume 1,2 $cm^3$/tour.
- Le bitume est chauffé à 120 °C, puis introduit en zone Z9 de l'extrudeuse à l'aide d'une pompe thermostatée.
- Le profil de température dans l'extrudeuse est indiqué à la figure 2.
- En sortie d'extrudeuse (zone Z16) les paramètres de la tête de granulation sous eau sont les suivants
    - Température de l'eau à 10°C ;
    - Utilisation de tuyaux de 4 m de long et d'anti-collant (1 à 2 %) dans l'eau ;
    - Filière de diamètre 2,8 mm à 2 trous (4 couteaux ½ épaisseur).
- Les granulés sont talqués.
- Les granulés sont séchés pendant 2 h à 70°C.

Le tableau 1 ci-dessous indique le taux de segments durs et le ratio NCO/OH obtenus. Les débits de chaque constituant sont ajustés pour obtenir les taux de segments durs et les ratios NCO/OH indiqués.

Tableau 1

| Essai | Réactifs | Taux de segments dur | Ratio NCO/OH |
|---|---|---|---|
| 1 | Radia® 7285<br>MDI<br>BDO | 17% | 0,958 |
| 1' | Radia® 7285<br>MDI<br>BDO<br>Bitume 1 | 17% | 0,958 |
| 2 | Radia® 7285<br>MDI<br>BDO | 21% | 0,954 |
| 2' | Radia® 7285<br>MDI<br>BDO<br>Bitume 1 | 21% | 0,954 |
| 3 | Priplast® 3196<br>MDI<br>BDO | 17% | 0,957 |

(suite)

| Essai | Réactifs | Taux de segments dur | Ratio NCO/OH |
|---|---|---|---|
| 3’ | Priplast® 3196<br>MDI<br>BDO<br>Bitume 1 | 17% | 0,957 |
| 4 | PTHF 2000<br>MDI<br>BDO | 22% | 0,970 |
| 4’ | PTHF 2000<br>MDI<br>BDO<br>Bitume 1 | 22% | 0,970 |

Le tableau 2 ci-dessous donne les températures de fusion et les indices de fluidité (190°C/3,8 kg) des granulés obtenus selon les essais du tableau 1.

Tableau 2

| Essai | Réactifs | Taux de segments dur | Ratio NCO/OH | Température de fusion (°C) | Indice de fluidité (190°C/3,8 kg) |
|---|---|---|---|---|---|
| 1 | Radia® 7285<br>MDI<br>BDO | 17% | 0,958 | 176 | 52,4 |
| 1’ | Radia® 7285<br>MDI<br>BDO<br>Bitume 1 (25%) | 17% | 0,958 | 148 | 258 |
| 2 | Radia® 7285<br>MDI<br>BDO | 21% | 0,954 | 177 | 78,3 |
| 2’ | Radia® 7285<br>MDI<br>BDO<br>Bitume 1 (25%) | 21% | 0,954 | 159 | 298,3 |
| 3 | Priplast® 3196<br>MDI<br>BDO | 17% | 0,957 | 160 | 99,7 |

(suite)

| Essai | Réactifs | Taux de segments dur | Ratio NCO/OH | Température de fusion (°C) | Indice de fluidité (190°C/3,8 kg) |
|---|---|---|---|---|---|
| 3' | Priplast® 3196<br>MDI<br>BDO<br>Bitume 1 (25%) | 17% | 0,957 | 142 | 339,1 |
| 4 | PTHF 2000<br>MDI<br>BDO | 22% | 0,970 | 158 | 60,6 |
| 4' | PTHF 2000<br>MDI<br>BDO<br>Bitume 1 (25%) | 22% | 0,970 | 100 | 191,7 |

Les granulés comprenant du bitume selon l'invention (essais 1', 2', 3' et 4') ont un point de fusion moins élevé et un indice de fluidité plus élevé que les granulés de polyuréthane pur correspondant (essais 1, 2, 3 et 4).

**Exemple 2** : **Utilisation des granulés selon l'invention pour préparer un liant bitumineux**

Dans un malaxeur thermostaté, on prépare des liants bitumineux ayant les compositions décrites dans le tableau 3 ci-dessous selon le procédé suivant : on introduit le bitume chauffé à 175°C puis on introduit les granulés. On introduit ensuite les charges dans le malaxeur.

Le tableau 3 ci-dessous donne le temps de mélange nécessaire pour obtenir un liant homogène sans infondus et les températures de Bille anneau (Tba) des liants.

Tableau 3

| Essai | Composition du liant (% en poids) | Temps nécessaire pour obtenir un liant homogène (min) | Tba (°C) |
|---|---|---|---|
| L1 | Bitume 1 : 49%<br>Granulés 1 : 21%<br>$CaCO_3$ : 30% | 58 | 148 |
| L1' | Bitume 1 : 49%<br>Granulés 1' : 21%<br>$CaCO_3$ : 30% | 35 | 147 |
| L2 | Bitume 1 : 49%<br>Granulés 3 : 21%<br>$CaCO_3$ : 30% | 30 | 153 |
| L2' | Bitume 1 : 49%<br>Granulés 3' : 21%<br>$CaCO_3$ : 30% | 28 | 148 |
| L3 | Bitume 1 : 49%<br>Granulés 4 : 21%<br>$CaCO_3$ : 30% | 40 | 140 |
| L3' | Bitume 1 : 49%<br>Granulés 4' : 21%<br>$CaCO_3$ : 30% | 31 | 140 |

(suite)

| Essai | Composition du liant (% en poids) | Temps nécessaire pour obtenir un liant homogène (min) | Tba (°C) |
|---|---|---|---|
| L4 | Bitume 1 : 55%<br>Granulés 4 : 45% | 65 | 152 |
| L4' | Bitume 1 : 55%<br>Granulés 4' : 45% | 35 | 152 |

Les liants formulés avec les granulés comprenant du bitume selon l'invention (essais L1', L2', L3' et L4') sont homogènes plus rapidement que les liants obtenus avec les granulés de polyuréthane pur correspondants (essais L1, L2, L3, et L4). Les températures de Bille anneau sont quasiment identiques pour les liants formulés avec les granulés comprenant du bitume selon l'invention et les liants obtenus avec les granulés de polyuréthane pur correspondants.

**Exemple 3** : **Compatibilisation de polyuréthane thermoplastique dans** un **bitume ayant une forte teneur en asphaltène**

Dans un malaxeur thermostaté, on prépare des liants bitumineux ayant les compositions décrites dans le tableau 4 ci-dessous selon le procédé suivant : on introduit le bitume chauffé à 175°C puis on introduit les granulés. On introduit ensuite les charges dans le malaxeur.

Tableau 4

| Essai | Composition du liant (% en poids) | Tba (°C) |
|---|---|---|
| L5' | Bitume 1 : 42%<br>Granulés 1' : 28%<br>$CaCO_3$ : 30% | 137 |
| L6' | Bitume 2 : 42%<br>Granulés 1' : 28%<br>$CaCO_3$ : 30% | 134 |

Le liant L6' est formulé avec du bitume 2 qui est moins compatible avec les granulés de polyuréthane pur car il présente une teneur en asphaltène supérieure à celle du bitume 1. Cependant, lorsqu'on utilise des granulés comprenant du bitume selon l'invention, aucun problème de compatibilisation n'a été observé pour le liant L6'. En effet, le liant L6' a une température de Bille anneau quasiment identique à celle du liant L5'.

## Revendications

**1.** Granulé **caractérisé en ce qu'**il comprend un polyuréthane élastomère thermoplastique et du bitume dans lequel ledit polyuréthane élastomère thermoplastique est obtenu par réaction entre :

- un polyol ayant une fonctionnalité comprise entre 1,75 et 2,2, de préférence entre 1,85 et 2,1, plus préférentiellement entre 1,95 et 2,05 et une masse molaire comprise entre 500 et 6000 g/mol, de préférence entre 900 et 5000 g/mol, plus préférentiellement entre 1500 et 3500 g/mol;
- un diisocyanate ; et
- un diol allongeur de chaine ayant une masse molaire inférieure à 500 g/mol, de préférence inférieure à 400 g/mol, plus préférentiellement inférieure à 300 g/mol ;

avec un ratio NCO/OH compris entre 0,9 et 1,02, de préférence entre 0,95 et 1, plus préférentiellement entre 0,97 et 0,99.

**2.** Granulé, selon la revendication 1, **caractérisé en ce qu'**il comprend :

- de 5 à 70%, de 10 à 70%, de 15 à 50%, de 20 à 40% en poids de bitume par rapport au poids du granulé ;
- de 95 à 30%, de 90 à 30%, de 85 à 50%, de 80 à 60% en poids de polyuréthane élastomère thermoplastique

par rapport au poids du granulé.

3. Granulé selon la revendication 1 ou 2, **caractérisé en ce que** le polyol est choisi parmi un polyéther polyol, un polyester polyol, un polycarbonate polyol, une polyoléfine polyol et leurs mélanges, de préférence le polyol est choisi parmi un polyéther polyol, un polyester polyol, une polyoléfine polyol, un polyol à base d'huile végétale et leurs mélanges.

4. Granulé selon l'une quelconque des revendications précédentes, **caractérisé en ce que** le diisocyanate est choisi parmi les diisocyanates aromatiques, aliphatiques, cycloaliphatiques, et leurs mélanges, de préférence le diisocyanate est un diisocyanate aromatique.

5. Granulé selon l'une quelconque des revendications précédentes, **caractérisé en ce qu'**il présente une température de fusion comprise entre 100 et 200°C, de préférence entre 120 et 190°C, plus préférentiellement entre 130 et 170°C.

6. Granulé selon l'une quelconque des revendications précédentes, **caractérisé en ce qu'**il présente un indice de fluidité (190°C/3,8 kg) compris entre 50 et 500, de préférence compris entre 80 et 300, plus préférentiellement compris entre 100 et 200.

7. Granulé selon l'une quelconque des revendications précédentes, **caractérisé en ce que** le polyuréthane élastomère thermoplastique présente une température de transition vitreuse (Tg) comprise entre -60°C et 0°C, de préférence entre -55°C et -10°C, plus préférentiellement entre -50°C et -20°C.

8. Granulé selon l'une quelconque des revendications précédentes, **caractérisé en ce que** le polyuréthane élastomère thermoplastique est synthétisé par extrusion réactive en présence de bitume.

9. Procédé de préparation d'un granulé de polyuréthane élastomère thermoplastique dispersé dans du bitume **caractérisé par le fait que** ledit polyuréthane est obtenu par réaction de polymérisation entre :

   - un polyol ayant une fonctionnalité comprise entre 1,75 et 2,2, de préférence entre 1,85 et 2,1, plus préférentiellement entre 1,95 et 2,05 et une masse molaire comprise entre 500 et 6000 g/mol, de préférence entre 900 et 5000 g/mol, plus préférentiellement entre 1500 et 3500 g/mol ;
   - un diisocyanate ; et
   - un diol allongeur de chaine ayant une masse molaire inférieure à 500 g/mol, de préférence inférieure à 400 g/mol, plus préférentiellement inférieure à 300 g/mol ;

   avec un ratio NCO/OH compris entre 0,9 et 1,02, de préférence entre 0,95 et 1, plus préférentiellement entre 0,97 et 0,99 ;
   ladite réaction de polymérisation étant conduite dans une extrudeuse en présence de bitume.

10. Procédé selon la revendication 9, **caractérisé en ce que** le granulé comprend :

   - de 5 à 70%, de 10 à 70%, de 15 à 50%, de 20 à 40% en poids de bitume par rapport au poids du granulé ;
   - de 95 à 30%, de 90 à 30%, de 85 à 50%, de 80 à 60% en poids de polyuréthane élastomère thermoplastique par rapport au poids du granulé.

11. Procédé selon la revendication 9 ou 10 **caractérisé en ce que** le procédé comprend les étapes suivantes :

   - introduction du polyol, du diisocyanate, du diol allongeur de chaîne et éventuellement d'un catalyseur et/ou d'un additif et/ou d'une charge dans une extrudeuse ;
   - introduction du bitume dans l'extrudeuse ;
   - découpe de l'extrudat en granulés en sortie de l'extrudeuse.

12. Procédé selon la revendication 9 ou 10 **caractérisé en ce que** le procédé comprend les étapes suivantes :

   - préparation d'un prépolymère par réaction entre le polyol et le diisocyanate ;
   - introduction du prépolymère, du diol allongeur de chaîne et éventuellement d'un catalyseur et/ou d'un additif et/ou d'une charge dans une extrudeuse ;
   - introduction du bitume dans l'extrudeuse ;

- découpe de l'extrudat en granulés en sortie de l'extrudeuse.

13. Procédé de préparation d'un liant bitumineux comprenant l'incorporation des granulés, tels que définis à l'une quelconque des revendications 1 à 8 ou tels que préparés à l'une quelconque des revendications 9 à 12, dans une composition comprenant du bitume liquide et éventuellement un ou plusieurs composé(s) choisi(s) dans le groupe consistant en une huile, une charge, un additif et un catalyseur.

14. Utilisation d'un granulé tel que défini à l'une quelconque des revendications 1 à 8 ou tel que préparé à l'une quelconque des revendications 9 à 12, pour la préparation d'un liant bitumineux comprenant du bitume, un polyuréthane élastomère thermoplastique et éventuellement une huile et/ou une charge et/ou un additif et/ou un catalyseur.

15. Utilisation selon la revendication 14, **caractérisée en ce que** le liant bitumineux est déposé sur un support fibreux pour former une membrane d'étanchéité préfabriquée.

## Patentansprüche

1. Granulatkorn, **dadurch gekennzeichnet, dass** es ein thermoplastisches Polyurethanelastomer und Bitumen umfasst, wobei das thermoplastische Polyurethanelastomer dadurch erhalten wird, dass die folgenden Stoffe miteinander reagieren:

   - ein Polyol mit einem Durchschnittswert an funktionellen Gruppen im Bereich von 1,75 und 2,2, vorzugsweise von 1,85 bis 2,1, mit größerem Vorzug von 1,95 bis 2,05, und einer Molmasse im Bereich von 500 bis 6.000 g/mol, vorzugsweise von 900 bis 5.000 g/mol, mit größerem Vorzug von 1.500 bis 3.500 g/mol;
   - ein Diisocyanat; und
   - ein kettenverlängerndes Diol mit einer Molmasse von weniger als 500 g/mol, vorzugsweise von weniger als 400 g/mol, mit größerem Vorzug von weniger als 300 g/mol;

   wobei das NCO/OH-Verhältnis im Bereich von 0,9 bis 1,02, vorzugsweise von 0,95 bis 1, mit größerem Vorzug von 0,97 bis 0,99, liegt.

2. Granulatkorn nach Anspruch 1, **dadurch gekennzeichnet, dass** es Folgendes umfasst:

   - 5 bis 70 Gewichts-%, 10 bis 70 Gewichts-%, 15 bis 50 Gewichts-%, 20 bis 40 Gewichts-% an Bitumen, bezogen auf das Gewicht des Granulatkorns;
   - 95 bis 30 Gewichts-%, 90 bis 30 Gewichts-%, 85 bis 50 Gewichts-%, 80 bis 60 Gewichts-% an thermoplastischem Polyurethanelastomer, bezogen auf das Gewicht des Granulatkorns.

3. Granulatkorn nach Anspruch 1 oder 2, **dadurch gekennzeichnet, dass** das Polyol aus einem Polyetherpolyol, einem Polyesterpolyol, einem Polycarbonatpolyol, einem Polyolefinpolyol und deren Mischungen ausgewählt ist, wobei das Polyol vorzugsweise aus einem Polyetherpolyol, einem Polyesterpolyol, einem Polyolefinpolyol, einem Polyol auf Basis pflanzlicher Öle und deren Mischungen ausgewählt ist.

4. Granulatkorn nach einem beliebigen der vorhergehenden Ansprüche, **dadurch gekennzeichnet, dass** das Diisocyanat aus den aromatischen, aliphatischen, cycloaliphatischen Diisocyanaten und deren Mischungen ausgewählt ist, wobei es sich bei dem Diisocyanat vorzugsweise um ein aromatisches Diisocyanat handelt.

5. Granulatkorn nach einem beliebigen der vorhergehenden Ansprüche, **dadurch gekennzeichnet, dass** es eine Schmelztemperatur im Bereich von 100 bis 200 °C, vorzugsweise von 120 bis 190 °C, mit größerem Vorzug von 130 bis 170 °C, aufweist.

6. Granulatkorn nach einem beliebigen der vorhergehenden Ansprüche, **dadurch gekennzeichnet, dass** es einen Schmelzflussindex (190 °C/3,8 kg) im Bereich von 50 bis 500, vorzugsweise im Bereich von 80 bis 300, mit größerem Vorzug im Bereich von 100 bis 200, aufweist.

7. Granulatkorn nach einem beliebigen der vorhergehenden Ansprüche, **dadurch gekennzeichnet, dass** das thermoplastische Polyurethanelastomer eine Glasübergangstemperatur (Tg) im Bereich von - 60 °C bis 0 °C, vorzugsweise von -55 °C bis -10 °C, mit größerem Vorzug von -50 °C bis -20 °C, aufweist.

8. Granulatkorn nach einem beliebigen der vorhergehenden Ansprüche, **dadurch gekennzeichnet, dass** das thermoplastische Polyurethanelastomer durch reaktive Extrusion in Gegenwart von Bitumen synthetisiert wird.

9. Verfahren zur Herstellung eines Granulatkorns aus thermoplastischem Polyurethanelastomer, das in Bitumen dispergiert ist, **dadurch gekennzeichnet, dass** das Polyurethan durch eine Polymerisationsreaktion der folgenden Stoffe erhalten wird:

   - eines Polyols mit einem Durchschnittswert an funktionellen Gruppen im Bereich von 1,75 und 2,2, vorzugsweise von 1,85 bis 2,1, mit größerem Vorzug von 1,95 bis 2,05, und einer Molmasse im Bereich von 500 bis 6.000 g/mol, vorzugsweise von 900 bis 5.000 g/mol, mit größerem Vorzug von 1.500 bis 3.500 g/mol;
   - eines Diisocyanats; und
   - eines kettenverlängernden Diols mit einer Molmasse von weniger als 500 g/mol, vorzugsweise von weniger als 400 g/mol, mit größerem Vorzug von weniger als 300 g/mol;

   wobei das NCO/OH-Verhältnis im Bereich von 0,9 bis 1,02, vorzugsweise von 0,95 bis 1, mit größerem Vorzug von 0,97 bis 0,99, liegt;
   wobei die Polymerisationsreaktion in einem Extruder in Gegenwart von Bitumen durchgeführt wird.

10. Granulatkorn nach Anspruch 9, **dadurch gekennzeichnet, dass** das Granulatkorn Folgendes umfasst:

    - 5 bis 70 Gewichts-%, 10 bis 70 Gewichts-%, 15 bis 50 Gewichts-%, 20 bis 40 Gewichts-% an Bitumen, bezogen auf das Gewicht des Granulatkorns;
    - 95 bis 30 Gewichts-%, 90 bis 30 Gewichts-%, 85 bis 50 Gewichts-%, 80 bis 60 Gewichts-% an thermoplastischem Polyurethanelastomer, bezogen auf das Gewicht des Granulatkorns.

11. Verfahren nach Anspruch 9 oder 10, **dadurch gekennzeichnet, dass** das Verfahren die folgenden Schritte umfasst:

    - Beschicken eines Extruders mit dem Polyol, dem Diisocyanat, dem kettenverlängernden Diol und möglicherweise einem Katalysator und/oder einem Zusatzstoff und/oder einem Füllstoff;
    - Beschicken des Extruders mit dem Bitumen;
    - Zuschneiden des Extrudats zu Granulatkörnern an der Austrittsöffnung des Extruders.

12. Verfahren nach Anspruch 9 oder 10, **dadurch gekennzeichnet, dass** das Verfahren die folgenden Schritte umfasst:

    - Herstellen eines Präpolymers durch Reaktion des Polyols mit dem Diisocyanat;
    - Beschicken eines Extruders mit dem Präpolymer, dem kettenverlängernden Diol und möglicherweise einem Katalysator und/oder einem Zusatzstoff und/oder einem Füllstoff;
    - Beschicken des Extruders mit dem Bitumen;
    - Zuschneiden des Extrudats zu Granulatkörnern an der Austrittsöffnung des Extruders.

13. Verfahren zur Herstellung eines bituminösen Bindemittels, welches das Einarbeiten der Granulatkörner gemäß der Begriffsbestimmung in einem beliebigen der Ansprüche 1 bis 8, oder wie sie in einem beliebigen der Ansprüche 9 bis 12 hergestellt wurden, in eine Zusammensetzung umfasst, welche flüssiges Bitumen und möglicherweise eine oder mehrere Verbindungen enthält, die aus der Gruppe ausgewählt sind, welche aus einem Öl, einem Füllstoff, einem Zusatzstoff und einem Katalysator besteht.

14. Verwendung eines Granulatkorns gemäß der Begriffsbestimmung in einem beliebigen der Ansprüche 1 bis 8, oder wie es in einem beliebigen der Ansprüche 9 bis 12 hergestellt wurde, zur Herstellung eines bituminösen Bindemittels, das Bitumen, ein thermoplastisches Polyurethanelastomer und möglicherweise ein Öl und/oder einen Füllstoff und/oder einen Zusatzstoff und/oder einen Katalysator umfasst.

15. Verwendung nach Anspruch 14, **dadurch gekennzeichnet, dass** das bituminöse Bindemittel auf einen faserartigen Träger aufgebracht wird, um eine vorgefertigte Abdichtungsmembran zu bilden.

## Claims

1. Granule, **characterized in that** it comprises a thermoplastic elastomeric polyurethane and bitumen, in which said

thermoplastic elastomeric polyurethane is obtained by reaction between:

- a polyol having a functionality of between 1.75 and 2.2, preferably between 1.85 and 2.1, more preferentially between 1.95 and 2.05 and a molar mass of between 500 and 6000 g/mol, preferably between 900 and 5000 g/mol, more preferentially between 1500 and 3500 g/mol;
- a diisocyanate; and
- a chain-extending diol with a molar mass of less than 500 g/mol, preferably less than 400 g/mol, more preferentially less than 300 g/mol;

with an NCO/OH ratio of between 0.9 and 1.02, preferably between 0.95 and 1, more preferentially between 0.97 and 0.99.

**2.** Granule according to Claim 1, **characterized in that** it comprises:

- from 5% to 70%, from 10% to 70%, from 15% to 50%, from 20% to 40% by weight of bitumen relative to the weight of the granule;
- from 95% to 30%, from 90% to 30%, from 85% to 50%, from 80% to 60% by weight of thermoplastic elastomeric polyurethane relative to the weight of the granule.

**3.** Granule according to Claim 1 or 2, **characterized in that** the polyol is chosen from a polyether polyol, a polyester polyol, a polycarbonate polyol and a polyolefin polyol, and mixtures thereof, preferably the polyol is chosen from a polyether polyol, a polyester polyol, a polyolefin polyol and a polyol based on plant oil, and mixtures thereof.

**4.** Granule according to any one of the preceding claims, **characterized in that** the diisocyanate is chosen from aromatic, aliphatic and cycloaliphatic diisocyanates, and mixtures thereof, preferably the diisocyanate is an aromatic diisocyanate.

**5.** Granule according to any one of the preceding claims, **characterized in that** it has a melting point of between 100 and 200°C, preferably between 120 and 190°C, more preferentially between 130 and 170°C.

**6.** Granule according to any one of the preceding claims, **characterized in that** it has a melt flow index (190°C/3.8 kg) of between 50 and 500, preferably between 80 and 300, more preferentially between 100 and 200.

**7.** Granule according to any one of the preceding claims, **characterized in that** the thermoplastic elastomeric polyurethane has a glass transition temperature (Tg) of between -60°C and 0°C, preferably between -55°C and -10°C, more preferentially between -50°C and -20°C.

**8.** Granule according to any one of the preceding claims, **characterized in that** the thermoplastic elastomeric polyurethane is synthesized by reactive extrusion in the presence of bitumen.

**9.** Process for preparing a granule of thermoplastic elastomeric polyurethane dispersed in bitumen, **characterized in that** said polyurethane is obtained by polymerization reaction between:

- a polyol having a functionality of between 1.75 and 2.2, preferably between 1.85 and 2.1, more preferentially between 1.95 and 2.05 and a molar mass of between 500 and 6000 g/mol, preferably between 900 and 5000 g/mol, more preferentially between 1500 and 3500 g/mol;
- a diisocyanate; and
- a chain-extending diol with a molar mass of less than 500 g/mol, preferably less than 400 g/mol, more preferentially less than 300 g/mol;

with an NCO/OH ratio of between 0.9 and 1.02, preferably between 0.95 and 1, more preferentially between 0.97 and 0.99; said polymerization reaction being performed in an extruder in the presence of bitumen.

**10.** Process according to Claim 9, **characterized in that** the granule comprises:

- from 5% to 70%, from 10% to 70%, from 15% to 50%, from 20% to 40% by weight of bitumen relative to the weight of the granule;
- from 95% to 30%, from 90% to 30%, from 85% to 50%, from 80% to 60% by weight of thermoplastic elastomeric

polyurethane relative to the weight of the granule.

**11.** Process according to Claim 9 or 10, **characterized in that** the process comprises the following steps:

- introduction of the polyol, the diisocyanate, the chain-extending diol and optionally a catalyst and/or an additive and/or a filler into an extruder;
- introduction of the bitumen into the extruder;
- chopping of the extrudate into granules at the extruder outlet.

**12.** Process according to Claim 9 or 10, **characterized in that** the process comprises the following steps:

- preparation of a prepolymer by reaction between the polyol and the diisocyanate;
- introduction of the prepolymer, the chain-extending diol and optionally a catalyst and/or an additive and/or a filler into an extruder;
- introduction of the bitumen into the extruder;
- chopping of the extrudate into granules at the extruder outlet.

**13.** Process for preparing a bituminous binder, comprising the incorporation of the granules, as defined in one of Claims 1 to 8 or as prepared in one of Claims 9 to 12, into a composition comprising liquid bitumen and optionally one or several compound(s) chosen from the group consisting of an oil, a filler, an additive and a catalyst.

**14.** Use of a granule as defined in one of Claims 1 to 8 or as prepared in one of Claims 9 to 12, for the preparation of a bituminous binder comprising bitumen, a thermoplastic elastomeric polyurethane and optionally an oil and/or a filler and/or an additive and/or a catalyst.

**15.** Use according to Claim 14, **characterized in that** the bituminous binder is deposited onto a fibrous support to form a prefabricated sealing membrane.

| | Elt n° | Début vis | Positions principales |
|---|---|---|---|
| | 1 | 0.75D (1,5) | |
| | 2 | 1.5D | |
| Z1 | 3 | 1.5D | |
| | 4 | 1.5D | |
| | 5 | 1.5D | Puits 1 |
| | 6 | 1.5D | |
| | 7 | 1D | |
| Z2 | 8 | 0,75 D | |
| | 9 | 0,75 D | |
| | 10 | 30°1D | |
| | 11 | 30°1D | |
| | 12 | 30°1D | Puits 2 |
| Z3 | 13 | 30°1D | SF1 |
| | 14 | 60°1D | |
| | 15 | 60°1D | |
| | 16 | 60°1D | |
| | 17 | trilob 1D | Puits 3 |
| Z4 | 18 | 90°1D | SF2 |
| | 19 | 1D | |
| | 20 | 1.5D | |
| | 21 | 1.5D | |
| | 22 | 1.5D | Puits 4 |
| Z5 | 23 | 1.5D | SF3 |
| | 24 | 1D | |
| | 25 | 1D | |
| | 26 | 1.5D | |
| | 27 | 1.5D | Puits 5 |
| Z6 | 28 | 1D | SF4 |
| | 29 | 1D | |
| | 30 | 1D | |
| | 31 | 1.5D | |
| | 32 | 1.5D | Puits 6 |
| Z7 | 33 | 1D | SF5 |
| | 34 | 1D | |
| | 35 | 1D | |
| | 36 | 0,75 D | |
| | 37 | 0,75 D | Puits 7 |
| Z8 | 38 | 30°1D | SF6 |
| | 39 | 30°1D | |
| | 40 | 60°1D | |
| | 41 | 60°1D | |
| | 42 | 60°1D | Puits 8 |
| Z9 | 43 | 90°1D | SF7 |
| | 44 | 90°1D | |
| | 45 | rev sfe | |
| | 46 | 1D | |
| | 47 | 1D | |
| Z10 | 48 | 1D | |
| | 49 | 1D | |
| | 50 | 1D | |
| | 51 | 1D | |
| | 52 | 1D | |
| Z11 | 53 | 1D | |
| | 54 | 1D | |
| | 55 | 1.5D | |
| | 56 | 1.5D | |
| | 57 | 1.5D | Puits 9 |
| Z12 | 58 | 1.5D | SF8 |
| | 59 | 1D | |
| | 60 | 1D | |
| | 61 | 1D | |
| | 62 | 0,75 D | Puits 10 |
| Z13 | 63 | 0,75 D | SF9 |
| | 64 | 0,75 D | |
| | 65 | 30°1D | |
| | 66 | 30°1D | |
| | 67 | 30°1D | Puits 11 |
| Z14 | 68 | 60°1D | SF10 |
| | 69 | 60°1D | |
| | 70 | 60°1D | |
| | 71 | 90°1D | |
| | 72 | 90°D8 1D | Puits 12 |
| Z15 | 73 | rev sfe | |
| | 74 | 1D | |
| | 75 | 1D | |
| | 76 | 1D | |
| | 77 | 0,75D | |
| Z16 | 78 | 0,75D | |
| | 79 | 0,75D | |
| | 80 | 0,75D | |

Figure 1

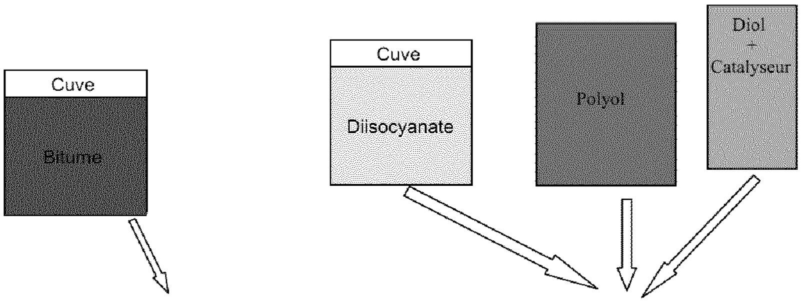


| | | | | | | | | | | | | | | | | |
|---|---|---|---|---|---|---|---|---|---|---|---|---|---|---|---|---|
| Z16 | Z15 | Z14 | Z13 | Z12 | Z11 | Z10 | Z9 | Z8 | Z7 | Z6 | Z5 | Z4 | Z3 | Z2 | Z1 | |
| 180 | 180 | 180 | 180 | 180 | 180 | 180 | 200 | 220 | 240 | 240 | 240 | 260 | 260 | 260 | 220 | Profil T° |

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2064750
- EP 1013716 A
- WO 9703253 A
- FR 2844283